# EUROPÄISCHE PATENTSCHRIFT

(11) **EP 3 656 032 B1**
(45) Veröffentlichungstag und Bekanntmachung des Hinweises auf die Patenterteilung: **10.08.2022**
(21) Anmeldenummer: 17764352.5
(22) Anmeldetag: 31.08.2017
(51) Int. Cl.: H02J 3/18, H02M 7/483

(54) **SERIENKOMPENSATIONSEINRICHTUNG**
SERIES COMPENSATION DEVICE
DISPOSITIF COMPENSATEUR SÉRIE

(43) Veröffentlichungstag der Anmeldung: 27.05.2020
(73) Patentinhaber: Siemens Energy Global GmbH & Co. KG, 81739 München (DE)
(72) Erfinder: ERNST, Patrik, 96172 Mühlhausen (DE); HASELBAUER, Andreas, 91058 Erlangen (DE); PILZ, Georg, 91099 Poxdorf (DE)
(86) Internationale Anmeldenummer: PCT/EP2017/071843
(87) Internationale Veröffentlichungsnummer: WO 2019/042551

(56) Entgegenhaltungen:
- CN-A- 106 451 466
- CN-A- 106 452 136
- VISSER A J ET AL: "Direct-coupled cascaded multilevel sag compensator", POWER ELECTRONICS SPECIALISTS CONFERENCE, 2000. PESC 00. 2000 IEEE 31S T ANNUAL 18-23 JUNE 2000, PISCATAWAY, NJ, USA,IEEE, Bd. 1, 18. Juni 2000 (2000-06-18), Seiten 463-469, XP010517279, ISBN: 978-0-7803-5692-4
- BRUCE S RIGBY ET AL: "An Improved Control Scheme for a Series-Capacitive Reactance Compensator Based on a Voltage-Source Inverter", IEEE TRANSACTIONS ON INDUSTRY APPLICATIONS, IEEE SERVICE CENTER, PISCATAWAY, NJ, US, Bd. 34, Nr. 2, 1. April 1998 (1998-04-01), XP011022366, ISSN: 0093-9994

## Beschreibung

Die Erfindung betrifft eine Serienkompensationseinrichtung für ein elektrisches Energieübertragungsnetz.

Die Übertragung von Wechselstrom über große Entfernungen wird hauptsächlich von der Impedanz der Übertragungsleitungen des Energieübertragungsnetzes begrenzt. Daher werden Serienkompensationseinrichtungen auf Basis von passiven Bauelementen wie beispielsweise Kondensatoren oder Spulen verwendet, um einen Teil der Leitungsreaktanz zu kompensieren bzw. zu erhöhen. Dadurch wird die über die Leitung übertragbare Wirkleistung erhöht. Dies erhöht die Effizienz der Wechselstromübertragung beträchtlich.

Bei der Serienkompensation ist es bekannt, beispielsweise einen Kondensator in Reihe zu der Übertragungsleitung zu schalten (Fixed Series Capacitor FSC oder Thyristor Controlled Series Capacitor TCSC). Dadurch wird die Längsimpendanz der Leitung verringert. Durch Anwendung einer Drosselspule kann die Impedanz einer Leitung auch erhöht werden. Weiterhin ist es denkbar, für diese Zwecke sogenannte SSSC (Static Synchronous Series Compensator) einzusetzen. Die genannten Lösungen müssen auf den jeweils vorliegenden Anwendungsfall hin zugeschnitten sein und müssen daher für jedes Projekt in weiten Teilen angepasst bzw. modifiziert werden.

Aus den Offenlegungsschriften CN 106452136 A und CN 106451466 A ist bekannt, eine Primärwicklung eines Transformators seriell in eine Phasenleitung eines Energieübertragungsnetzes zu schalten und die Sekundärwicklung des Transformators mit einem modularen Multilevelstromrichter zu verbinden.

Aus dem Artikel "Direct-coupled cascaded multilevel sag compensator" von Visser A. J. et al, Power Electronics Specialists Conference, IEEE 31 st Annual, Bd. 1, 18. Juni 2000, Seiten 463-469 ist bekannt, bei einem transformatorlosen Serienkompensator einen Multilevel-Stromrichter einzusetzen.

Der Erfindung liegt die Aufgabe zugrunde, eine Serienkompensationseinrichtung und ein Serienkompensationsverfahren anzugeben, die flexibel eingesetzt werden können.

Diese Aufgabe wird erfindungsgemäß gelöst durch eine Serienkompensationseinrichtung und durch ein Serienkompensationsverfahren nach den unabhängigen Patentansprüchen. Vorteilhafte Ausführungsformen der Serienkompensationseinrichtung sind in den abhängigen Patentansprüchen angegeben.

Offenbart wird eine Serienkompensationseinrichtung für ein elektrisches Energieübertragungsnetz mit einem Transformator, wobei eine Primärwicklung des Transformators seriell in eine Phasenleitung des Energieübertragungsnetzes schaltbar (bzw. geschaltet) ist, und mit einem modularen Multilevel-Stromrichter, der eine Vielzahl von Modulen aufweist, die eine elektrische Modul-Reihenschaltung bilden, wobei der modulare Multilevel-Stromrichter (wechselspannungsseitig) mit einer Sekundärwicklung des Transformators verbunden ist. Dabei ist besonders vorteilhaft, dass ein modularer Multilevel-Stromrichter mit der Sekundärwicklung des Transformators verbunden ist. Genauer gesagt, ist ein Wechselspannungsanschluss des Multilevelstromrichters mit der Sekundärwicklung des Transformators verbunden. Mittels des modularen Multilevelstromrichters können nahezu beliebige Spannungsverläufe bzw. Spannungen erzeugt werden und an die Sekundärwicklung des Transformators angelegt werden. Damit kann in weitem Umfang die effektive Impedanz der Phasenleitung beeinflusst werden und es kann eine Lastflusssteuerung in der Phasenleitung durchgeführt werden. Weiterhin ist vorteilhaft, dass durch den Einsatz eines modularen Multilevelstromrichters unerwünschte Schwingungen im Energieübertragungsnetz (sog. Sub Synchronous Resonances) vermieden werden, welche beispielsweise beim Einsatz von Reihenkondensatoren mit einer konstanten Kapazität hervorrufen werden können. Die Möglichkeit der Dämpfung solcher Resonanzen bzw. Schwingungen ist eine vorteilhafte Eigenschaft der Serienkompensationseinrichtung.

Die Serienkompensationseinrichtung kann so ausgestaltet sein, dass der modulare Multilevel-Stromrichter drei Modul-Reihenschaltungen aufweist, die eine Dreieckschaltung bilden.

Die Serienkompensationseinrichtung kann auch so ausgestaltet sein, dass der modulare Multilevel-Stromrichter sechs Modul-Reihenschaltungen aufweist, die eine (dreiphasige) Brückenschaltung bilden.

Die Serienkompensationseinrichtung kann so ausgestaltet sein, dass die Module jeweils mindestens zwei elektronische Schaltelemente und einen elektrischen Modul-Energiespeicher aufweisen. Derartige Module werden auch als Submodule des modularen Multilevel-Stromrichters bezeichnet.

Die Serienkompensationseinrichtung kann auch so ausgestaltet sein, dass die zwei elektronischen Schaltelemente der Module in einer Halbbrückenschaltung angeordnet sind, oder die Module jeweils die zwei elektronischen Schaltelemente und zwei weitere elektronische Schaltelemente aufweisen, wobei die zwei elektronischen Schaltelemente und die zwei weiteren elektronischen Schaltelemente in einer Vollbrückenschaltung angeordnet sind. Derartige Module werden auch als Vollbrücken-Module oder als Vollbrücken-Submodule des modularen Multilevel-Stromrichters bezeichnet.

Die Serienkompensationseinrichtung ist so ausgestaltet, dass der modulare Multilevel-Stromrichter (gleichspannungsseitig) mit einem Energiespeicher verbunden ist. Dabei ist ein Gleichspannungsanschluss des Multilevel-Stromrichters mit dem Energiespeicher verbunden. Dabei ist besonders vorteilhaft, dass der Energiespeicher den modularen Multilevelstromrichter mit elektrischer Energie versorgen kann. Dadurch kann der modulare Multilevelstromrichter nicht nur Blindleistung, sondern auch Wirkleistung in das Energieübertragungsnetz einspeisen.

Die Serienkompensationseinrichtung ist so ausgestaltet, dass der Energiespeicher eine Mehrzahl von miteinander verbundenen Energiespeichereinheiten aufweist. Durch die Nutzung einer Mehrzahl von miteinander verbundenen Energiespeichereinheiten kann der Energiespeicher vorteilhafterweise große Ströme oder große Spannungen bereitstellen sowie eine große elektrische Kapazität aufweisen.

Die Serienkompensationseinrichtung kann so ausgestaltet sein, dass die Energiespeichereinheiten Kondensatoren und/oder Batterien sind.

Die Serienkompensationseinrichtung kann auch so ausgestaltet sein, dass eine Steuereinrichtung, die den Multilevel-Stromrichter so ansteuert, dass der Multilevelstromrichter eine sich periodisch zeitlich verändernde Spannung erzeugt. Diese sich periodisch zeitlich verändernde Spannung wird von dem Transformator (unter Bildung einer transformierten Spannung) transformiert. Die transformierte Spannung wird mittels des Transformators seriell in die Phasenleitung des Energieübertragungsnetzes eingeprägt (eingespeist). Der Multilevelstromrichter ist vorteilhafterweise in der Lage, bei Bedarf verschiedenste sich periodisch zeitlich ändernde Spannungen zu erzeugen. Dadurch kann die Serienkompensationseinrichtung für eine Vielzahl von unterschiedlichen Kompensationsaufgaben eingesetzt werden. Die Serienkompensationseinrichtung kann auch ohne Änderungen an der Hardware an unterschiedlichste Gegebenheiten angepasst werden.

Offenbart wird weiterhin ein Serienkompensationsverfahren für ein elektrisches Energieübertragungsnetz, bei dem
- von einem modularen Multilevelstromrichter eine sich periodisch zeitlich verändernde Spannung erzeugt wird,
- eine Sekundärwicklung eines Transformators mit dieser Spannung beaufschlagt wird,
- von dem Transformator diese Spannung auf eine Primärwicklung des Transformators transformiert wird (unter Bildung einer transformierten Spannung), und
- mittels der Primärwicklung die transformierte Spannung seriell in eine Phasenleitung des Energieübertragungsnetzes eingeprägt (eingespeist) wird.

Dieses Verfahren weist gleichartige Vorteile auf, wie sie oben im Zusammenhang mit der Serienkompensationseinrichtung beschrieben sind.

Im Folgenden wird die Erfindung anhand von Ausführungsbeispielen näher erläutert. Gleiche Bezugszeichen verweisen dabei auf gleiche oder gleichwirkende Elemente. Dazu ist in
- Figur 1: ein Ausführungsbeispiel einer Serienkompensationseinrichtung mit einem modularer Multilevelstromrichter, in
- Figur 2: ein Ausführungsbeispiel eines Moduls des modularen Multilevelstromrichters, in
- Figur 3: ein weiteres Ausführungsbeispiel eines Moduls des modularen Multilevelstromrichters, in
- Figur 4: ein Ausführungsbeispiel einer Serienkompensationseinrichtung für eine Phasenleitung eines Energieübertragungsnetzes, in
- Figur 5: ein Ausführungsbeispiel einer Serienkompensationseinrichtung für drei Phasenleitungen des Energieübertragungsnetzes, in
- Figur 6: ein Ausführungsbeispiel eines Teils einer Serienkompensationseinrichtung mit einem Multilevel-Stromrichter mit Halbbrücken-Submodulen, in
- Figur 7: ein Ausführungsbeispiel eines Teils einer Serienkompensationseinrichtung mit einem Multilevel-Stromrichter mit Vollbrücken-Submodulen, in
- Figur 8: ein Ausführungsbeispiel eines Energiespeichers zum gleichspannungsseitigen Anschluss an den modularer Multilevelstromrichter, und in
- Figur 9: ein beispielhafter Ablauf eines Serienkompensationsverfahrens für ein elektrisches Energieübertragungsnetz
dargestellt.

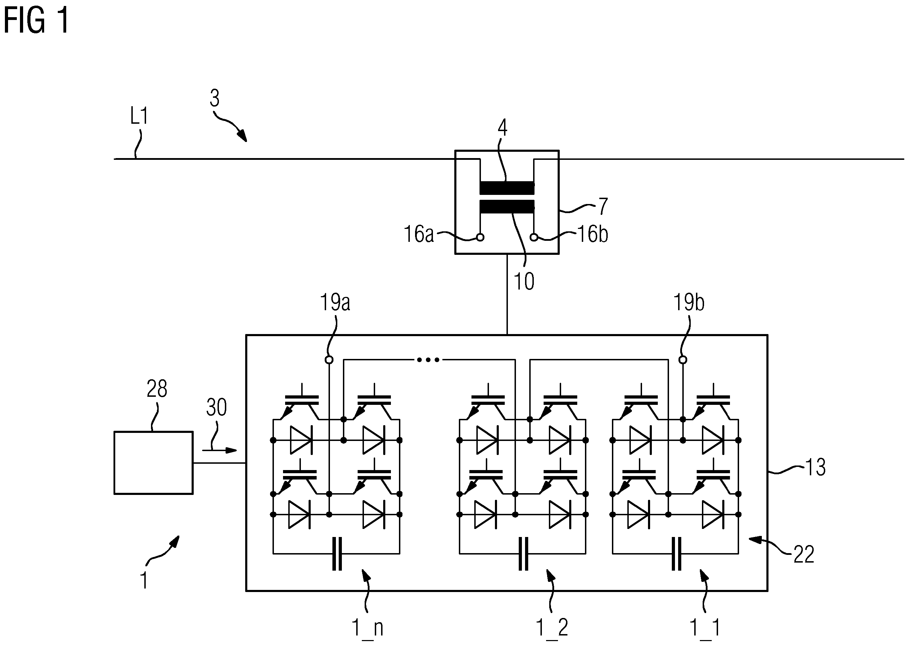

In Figur 1 ist ein Ausführungsbeispiel einer Serienkompensationseinrichtung 1 dargestellt. Ein Energieübertragungsnetz 3 weist eine erste Phasenleitung L1 auf. Dabei handelt sich um ein Wechselstrom-Energieübertragungsnetz 3. In die erste Phasenleitung L1 ist seriell eine Primärwicklung 4 eines Transformators 7 schaltbar bzw. geschaltet. Im Ausführungsbeispiel ist das Energieübertragungsnetz ein Hochspannungs-Energieübertragungsnetz und die erste Phasenleitung L1 eine erste Hochspannungs-Phasenleitung L1. Der Transformator 7 ist dementsprechend ein Hochspannungs-Transformator 7. Eine Sekundärwicklung 10 des Transformators 7 ist mit einem modularen Multilevelstromrichter 13 elektrisch verbunden. Genauer gesagt sind zwei Sekundärwicklungsanschlüsse 16a und 16b elektrisch verbunden mit zwei Wechselspannungsanschlüssen 19a und 19b des modularen Multilevelstromrichters 13. Der modulare Multilevelstromrichter 13 weist eine Reihenschaltung 22 von Modulen 1_1, 1 2, ... 1_n auf. Die Reihenschaltung der Module 1_1 bis 1_n erstreckt sich zwischen den beiden Wechselspannungsanschlüssen 19a und 19b des modularen Multilevelstromrichters 13. Im Ausführungsbeispiel der Figur 1 sind die Module 1_1 bis 1_n als Vollbrücken-Module ausgestaltet. In einem anderen Ausführungsbeispiel können die Module aber auch Halbbrücken-Module sein.

Weiterhin ist eine Steuereinrichtung 28 dargestellt, welche die Module 1_1 bis 1_n ansteuert. Daraufhin wird an den Wechselspannungsanschlüssen 19a und 19b der Reihenschaltung 22 eine sich periodisch zeitlich verändernde Spannung erzeugt, mit der die Sekundärwicklung 10 des Transformators 7 beaufschlagt wird. Der Transformator 7 transformiert diese sich periodisch zeitlich verändernde Spannung auf die Primärwicklung 4. Die Primärwicklung 4 prägt diese transformierte Spannung in die erste Phasenleitung L1 des Energieübertragungsnetzes 3 ein (die transformierte Spannung wird in die erste Phasenleitung L1 des Energieübertragungsnetzes 3 eingespeist). Dadurch wird eine Serienkompensation des Energieübertragungsnetzes durchgeführt. Dabei kann ein Effekt hervorgerufen werden, als ob ein Kondensator oder eine Induktivität mit dem Energieübertragungsnetz 3 verbunden worden wäre.

Die Steuereinrichtung 28 sendet Steuersignale 30 an den modularen Multilevelstromrichter. Diese Steuersignale 30 gelangen zu den einzelnen Modulen 1_1 bis 1_n des Multilevel-Stromrichters und steuern elektronische Schaltelemente der Module an. Beispielsweise kann die Steuereinrichtung 28 an die einzelnen Module jeweils einen Sollwert für die Höhe der Ausgangsspannung senden, die das jeweilige Modul bereitstellen soll. Dadurch kann mittels der Reihenschaltung 22 der Module eine nahezu beliebige Spannung erzeugt werden, welche an den Wechselspannungsanschlüssen 19a und 19b der Reihenschaltung 22 ausgegeben wird.

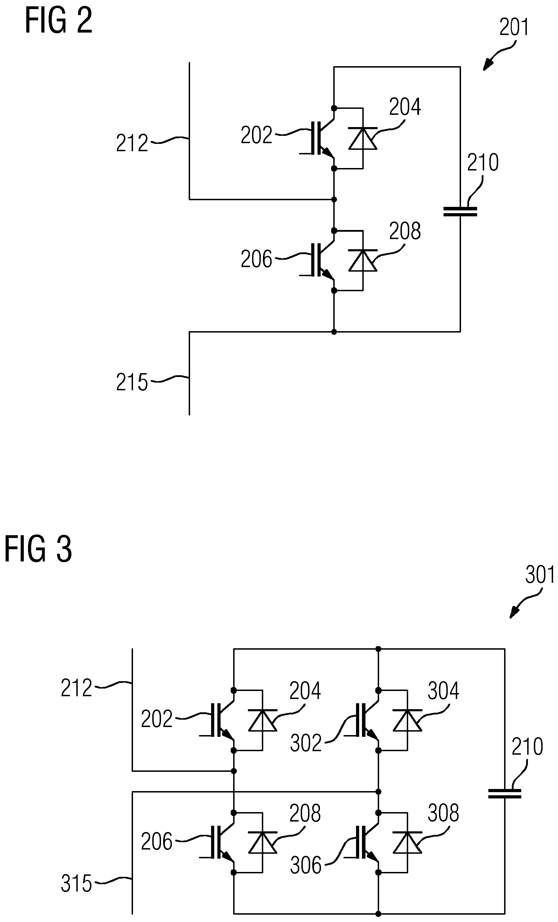

In Figur 2 ist beispielhaft der Aufbau eines Moduls 201 dargestellt. Dabei kann es sich beispielsweise um das Modul 1_1 des modularen Multilevelstromrichters 13 (oder um eines der anderen in Figur 1 dargestellten Module) handeln.

Das Modul ist als ein Halbbrücken-Modul 201 ausgestaltet. Das Modul 201 weist ein erstes ein- und abschaltbares elektronisches Schaltelement 202 (erstes elektronisches Schaltelement 202) mit einer ersten antiparallel geschalteten Diode 204 (erste Freilaufdiode 204) auf. Weiterhin weist das Modul 201 ein zweites ein- und abschaltbares elektronisches Schaltelement 206 (zweites elektronisches Schaltelement 206) mit einer zweiten antiparallel geschalteten Diode 208 (zweite Freilaufdiode 208) und einen elektrischen Modul-Energiespeicher 210 in Form eines elektrischen Kondensators 210 auf. Das erste elektronische Schaltelement 202 und das zweite elektronische Schaltelement 206 sind jeweils als ein IGBT (insulated-gate bipolar transistor) ausgestaltet. (In einem anderen Ausführungsbeispiel können die elektronischen Schaltelemente aber beispielsweise auch als GTOs (Gate Turn-Off Thyristor) oder als IGCTs (Integrated Gate-Commutated Thyristor) ausgestaltet sein.) Das erste elektronische Schaltelement 202 ist elektrisch in Reihe geschaltet mit dem zweiten elektronischen Schaltelement 206. Am Verbindungspunkt zwischen den beiden elektronischen Schaltelementen 202 und 206 ist ein erster (galvanischer) Modulanschluss 212 angeordnet. An dem Anschluss des zweiten Schaltelements 206, welcher dem Verbindungspunkt gegenüberliegt, ist ein zweiter (galvanischer) Modulanschluss 215 angeordnet. Der zweite Modulanschluss 215 ist weiterhin mit einem ersten Anschluss des Modul-Energiespeichers 210 verbunden; ein zweiter Anschluss des Modul-Energiespeichers 210 ist elektrisch verbunden mit dem Anschluss des ersten Schaltelements 202, der dem Verbindungspunkt gegenüberliegt.

Der Modul-Energiespeicher 210 ist also elektrisch parallel geschaltet zu der Reihenschaltung aus dem ersten Schaltelement 202 und dem zweiten Schaltelement 206. Durch entsprechende Ansteuerung des ersten Schaltelements 202 und des zweiten Schaltelements 206 kann erreicht werden, dass zwischen dem ersten Modulanschluss 212 und dem zweiten Modulanschluss 215 entweder die Spannung des Modul-Energiespeichers 210 ausgegeben wird oder keine Spannung ausgegeben wird (d.h. eine Nullspannung ausgegeben wird). Durch Zusammenwirken der Module der einzelnen Modul-Reihenschaltung kann so die jeweils gewünschte Ausgangsspannung des Stromrichters erzeugt werden. Die Ansteuerung des ersten Schaltelements 202 und des zweiten Schaltelements 206 erfolgt im Ausführungsbeispiel mittels der oben erwähnten Steuersignale 30 der Steuereinrichtung 28.

In Figur 3 ist ein weiteres Ausführungsbeispiel eines Moduls 301 des modularen Multilevelstromrichters dargestellt. Bei diesem Modul 301 kann es sich beispielsweise um das Modul 1_1 (oder auch um eines der anderen in Figur 1 dargestellten Module) handeln. Neben den bereits aus Figur 2 bekannten ersten elektronischen Schaltelement 202, zweiten elektronischen Schaltelement 206, erster Freilaufdiode 204, zweiter Freilaufdiode 208 und Modul-Energiespeicher 210 weist das in Figur 3 dargestellte Modul 301 ein drittes elektronisches Schaltelement 302 mit einer dritten antiparallel geschalteten Freilaufiode 304 sowie ein viertes elektronischen Schaltelement 306 mit einer vierten antiparallel geschalteten Freilaufdiode 308 auf. Das dritte elektronische Schaltelement 302 und das vierte elektronische Schaltelement 306 sind jeweils als ein IGBT ausgestaltet (in einem anderen Ausführungsbeispiel können die elektronischen Schaltelemente aber beispielsweise auch ein GTO oder ein IGCT ausgestaltet sein). Im Unterschied zur Schaltung der Figur 2 ist der zweite Modulanschluss 315 nicht mit dem zweiten elektronischen Schaltelement 206 elektrisch verbunden, sondern mit einem Mittelpunkt einer elektrischen Reihenschaltung aus dem dritten elektronischen Schaltelement 302 und dem vierten elektronischen Schaltelement 306.

Das Modul 301 der Figur 3 ist ein sogenanntes Vollbrücken-Modul 301. Dieses Vollbrücken-Modul 301 zeichnet sich dadurch aus, dass bei entsprechender Ansteuerung der vier elektronischen Schaltelemente zwischen dem ersten Modulanschluss 212 und dem zweiten Modulanschluss 315 wahlweise entweder die positive Spannung des Modul-Energiespeichers 210, die negative Spannung des Modul-Energiespeichers 210 oder eine Spannung des Wertes Null (Nullspannung) ausgegeben werden kann. Somit kann also mittels des Vollbrückenmoduls 301 die Polarität der Ausgangsspannung umgekehrt werden. Der Stromrichter 13 kann entweder nur Halbbrücken-Module 201, nur Vollbrücken-Module 301 oder auch Halbbrücken-Module 201 und Vollbrücken-Module 301 aufweisen.

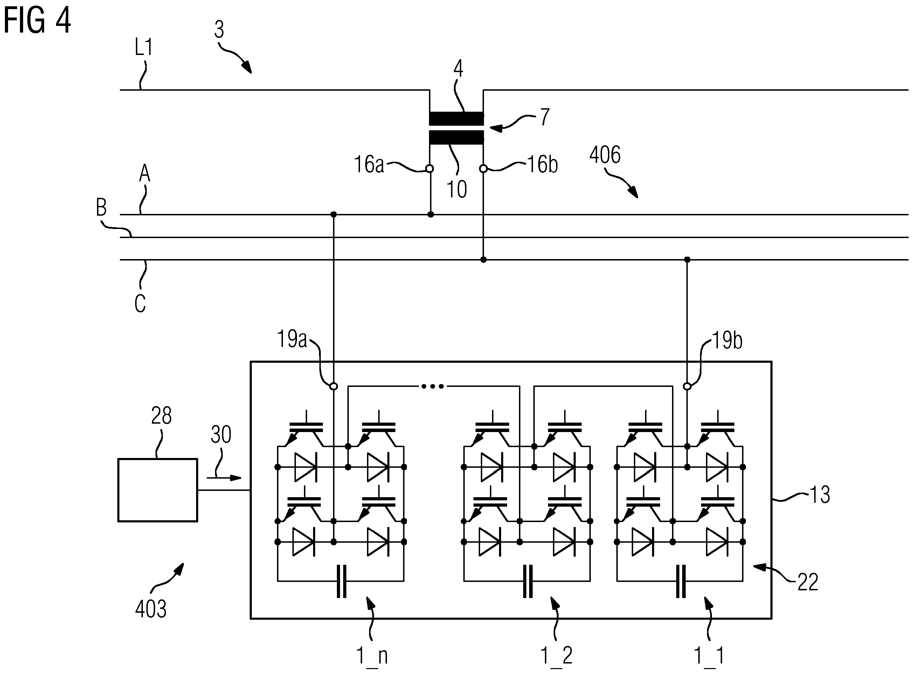

In Figur 4 ist ein weiteres Ausführungsbeispiel einer Serienkompensationseinrichtung 403 dargestellt. Diese Serienkompensationseinrichtung 403 weist ein dreiphasiges Anschlusssystem 406 auf, welches elektrisch mit der Sekundärwicklung 10 des Transformators 7 verbunden ist. Das Anschlusssystem 406 weist eine erste Anschlussleitung A, eine zweite Anschlussleitung B und eine dritte Anschlussleitung C auf. Die erste Anschlussleitung A, die zweite Anschlussleitung B und/oder die dritte Anschlussleitung C können beispielsweise Stromschienen oder Sammelschienen sein, insbesondere Mittelspannungs-Stromschienen bzw. Mittelspannungs-Sammelschienen.

Der erste Sekundärwicklungsanschluss 16a der Sekundärwicklung 10 ist mit der ersten Anschlussleitung A elektrisch verbunden, der zweite Sekundärwicklungsanschluss 16b der Sekundärwicklung 10 ist mit der dritten Anschlussleitung C elektrisch verbunden. Da in Figur 4 nur die erste Phasenleitung L1 des Energieübertragungsnetzes 3 dargestellt ist, bleibt die zweite Anschlussleitung B unbelegt.

Die erste Anschlussleitung A ist elektrisch mit dem ersten Wechselspannungsanschluss 19a des modulare Multilevel- Stromrichters 13 verbunden; die dritte Anschlussleitung C ist elektrisch mit dem zweiten Wechselspannungsanschluss 19b des modulare Multilevelstromrichters 13 elektrisch verbunden. Dadurch ist der erste Sekundärwicklungsanschluss 16a der Sekundärwicklung 10 mit dem ersten Wechselspannungsanschluss 19a des Multilevel-Stromrichters 13 verbunden; der zweite Sekundärwicklungsanschluss 16b des Transformators 7 ist mit dem zweiten Wechselspannungsanschluss 19b des Multilevel-Stromrichters 13 elektrisch verbunden. Dadurch kann der modulare Multilevelstromrichter 13 die an dessen Wechselspannungsanschlüssen 19a und 19b erzeugte Spannung in die Sekundärwicklung 10 des Transformators 7 einspeisen. Die Sekundärwicklung 10 wird also mit der von dem modularen Multilevelstromrichter 13 erzeugten Spannung beaufschlagt.

Mit anderen Worten gesagt, wird mittels der Serienkompensationseinrichtung 403 eine steuerbare Spannungsquelle in die Phasenleitung L1 geschaltet. Die Primärwicklung 4 des Transformators 7 wird in die erste Phasenleitung L1 geschaltet. Die Sekundärwicklung 10 des Transformators 7 (d.h. insbesondere die Sekundärwicklungsanschlüsse 16a und 16b) wird mit dem Multilevel-Stromrichter verbunden. Dabei ist die Primärwicklung 4 insbesondere eine Hochspannungswicklung 4; die Sekundärwicklung 10 ist insbesondere eine Mittelspannungswicklung 10.

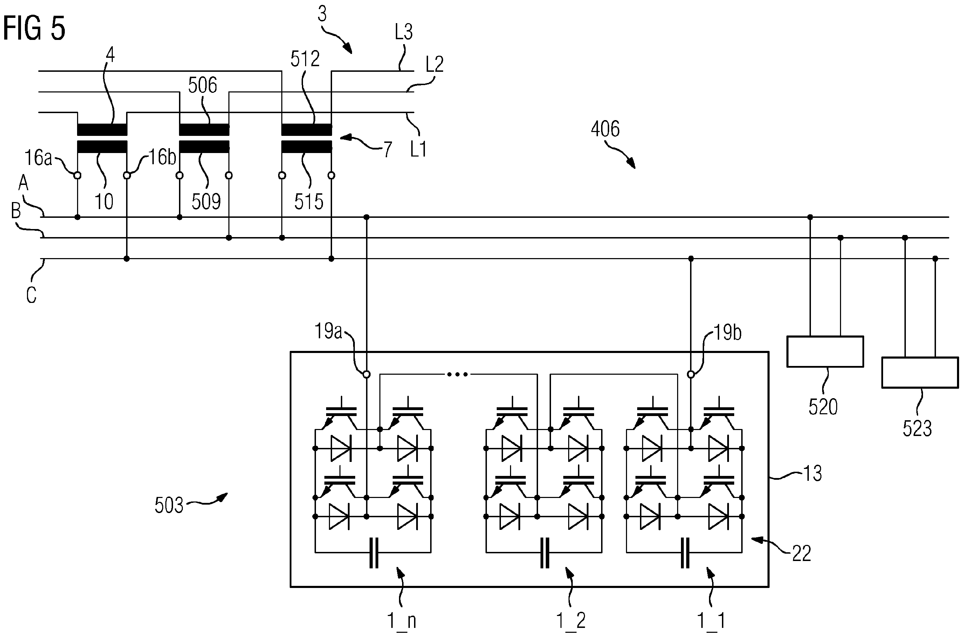

In Figur 5 ist ein Ausführungsbeispiel einer dreiphasigen Serienkompensationseinrichtung 503 dargestellt. Diese Serienkompensationseinrichtung 503 stellt eine Erweiterung der in Figur 4 dargestellten einphasigen Serienkompensationseinrichtung 403 auf drei Phasen dar.

Im Ausführungsbeispiel der Figur 5 weist das Energieübertragungsnetz 3 neben der ersten Phasenleitung L1 auch eine zweite Phasenleitung L2 und eine dritte Phasenleitung L3 auf. Der Transformator 7 weist neben der ersten Primärwicklung 4 und der ersten Sekundärwicklung 10 zusätzlich eine zweite Primärwicklung 506, eine zweite Sekundärwicklung 509, eine dritte Primärwicklung 512 und eine dritte Sekundärwicklung 515 auf. Die zweite Phasenleitung L2 ist mittels der zweiten Primärwicklung 506 und der zweiten Sekundärwicklung 509 mit der ersten Anschlussleitung A und der zweiten Anschlussleitung B gekoppelt. Die dritte Phasenleitung L3 ist mittels der dritten Primärwicklung 512 und der dritten Sekundärwicklung 515 mit der zweiten Anschlussleitung B und der dritten Anschlussleitung C gekoppelt. Im Ausführungsbeispiel der Figur 5 sind die Sekundärwicklungen 10, 509 und 515 des Transformators 7 in einer Dreieckschaltung geschaltet. In einem anderen Ausführungsbeispiel können die Sekundärwicklungen des Transformators 7 aber auch anders geschaltet sein, beispielsweise in einer Sternschaltung.

Wie beim Ausführungsbeispiel der Figur 4 ist die erste Anschlussleitung A und die dritte Anschlussleitung C mit der ersten Reihenschaltung 22 von Modulen des Multilevel-Stromrichters elektrisch verbunden. Weiterhin ist die erste Anschlussleitung A und die zweite Anschlussleitung B mit einer zweiten Reihenschaltung 520 von Modulen des Multilevel-Stromrichters elektrisch verbunden. Die zweite Anschlussleitung B und die dritte Anschlussleitung C sind elektrisch verbunden mit einer dritten Reihenschaltung 523 von Modulen des Multilevel-Stromrichters. Die erste Anschlussleitung A, die zweite Anschlussleitung B und die dritte Anschlussleitung C dienen also im Ausführungsbeispiel lediglich der Verbindung der Sekundärwicklungen (Sekundärspulen) des Transformators 7 mit den Wechselspannungsanschlüssen des Multilevel-Stromrichters.

Die erste Reihenschaltung 22, die zweite Reihenschaltung 520 und die dritte Reihenschaltung 523 sind im Ausführungsbeispiel gleichartig aufgebaut; sie weisen insbesondere jeweils dieselbe Anzahl von Modulen auf. Die drei Reihenschaltungen stellen also gleichartige Konverterphasen (Phasenmodule) dar. Die drei Modul-Reihenschaltungen 22, 520 und 523 sind im Ausführungsbeispiel in einer Dreiecksschaltung geschaltet. In anderen Ausführungsbeispielen können diese Reihenschaltungen aber auch anders geschaltet sein, beispielsweise in einer Sternschaltung.

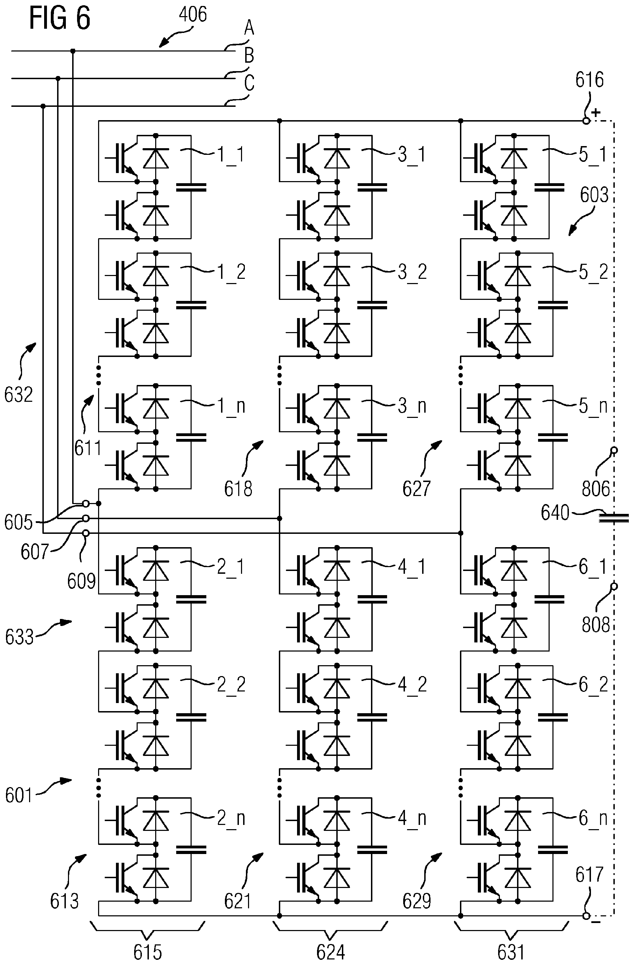

In Figur 6 ist beispielhaft ein Teil einer weiteren Serienkompensationseinrichtung 601 dargestellt. Von dieser Serienkompensationseinrichtung 601 sind lediglich die drei Anschlussleitung A, B und C sowie der modulare Multilevel-Stromrichter 603 dargestellt. Die drei Anschlussleitungen A, B und C sind ähnlich wie bei Figur 5 über einen Transformator mit den drei Phasenleitungen L1, L2 und L3 des Energieübertragungsnetzes 3 elektrisch verbunden.

Der Multilevel-Stromrichter 603 weist einen ersten Wechselspannungsanschluss 605, einen zweiten Wechselspannungsanschluss 607 und einen dritten Wechselspannungsanschluss 609 auf. Der erste Wechselspannungsanschluss 605 ist elektrisch verbunden mit der ersten Anschlussleitung A; der zweite Wechselspannungsanschluss 607 ist elektrisch verbunden mit der zweiten Anschlussleitung B und der dritte Wechselspannungsanschluss 609 ist elektrisch verbunden mit der dritten Anschlussleitung C.

Der erste Wechselspannungsanschluss 605 ist elektrisch mit einem ersten Phasenmodulzweig 611 und einem zweiten Phasenmodulzweig 613 verbunden. Der erste Phasenmodulzweig 611 und der zweite Phasenmodulzweig 613 bilden ein erstes Phasenmodul 615 des Stromrichters 603. Das dem ersten Wechselspannungsanschluss 605 abgewandte Ende des ersten Phasenmodulzweigs 611 ist mit einem ersten Gleichspannungsanschluss 616 elektrisch verbunden; das dem ersten Wechselspannungsanschluss 605 abgewandte Ende des zweiten Phasenmodulzweigs 613 ist mit einem zweiten Gleichspannungsanschluss 617 elektrisch verbunden. Der erste Gleichspannungsanschluss 616 ist ein positiver Gleichspannungsanschluss; der zweite Gleichspannungsanschluss 617 ist ein negativer Gleichspannungsanschluss.

Der zweite Wechselspannungsanschluss 607 ist mit einem Ende eines dritten Phasenmodulzweigs 618 und mit einem Ende eines vierten Phasenmodulzweigs 621 elektrisch verbunden. Der dritte Phasenmodulzweig 618 und der vierte Phasenmodulzweig 621 bilden ein zweites Phasenmodul 624. Der dritte Wechselspannungsanschluss 609 ist mit einem Ende eines fünften Phasenmodulzweigs 627 und mit einem Ende eines sechsten Phasenmodulzweigs 629 elektrisch verbunden. Der fünfte Phasenmodulzweig 627 und der sechste Phasenmodulzweig 629 bilden ein drittes Phasenmodul 631.

Das dem zweiten Wechselspannungsanschluss 607 abgewandte Ende des dritten Phasenmodulzweigs 618 und das dem dritten Wechselspannungsanschluss 609 abgewandte Ende des fünften Phasenmodulzweigs 627 sind mit dem ersten Gleichspannungs-anschluss 616 elektrisch verbunden. Das dem zweiten Wechselspannungsanschluss 607 abgewandte Ende des vierten Phasenmodulzweigs 621 und das dem dritten Wechselspannungsanschluss 609 abgewandte Ende des sechsten Phasenmodulzweigs 629 sind mit dem zweiten Gleichspannungsanschluss 617 elektrisch verbunden. Der erste Phasenmodulzweig 611, der dritte Phasenmodulzweig 618 und der fünfte Phasenmodulzweig 627 bilden ein positivseitiges Stromrichterteil 632; der zweite Phasenmodulzweig 613, der vierte Phasenmodulzweig 621 und der sechste Phasenmodulzweig 629 bilden ein negativseitiges Stromrichterteil 633.

Jeder Phasenmodulzweig weist eine Mehrzahl von Modulen (1_1, 1_2, ... 1_n; 2_1 ... 2_n; usw.) auf, welche (mittels ihrer Stromanschlüsse) elektrisch in Reihe geschaltet sind. Jeder Phasenmodulzweig ist also eine elektrische Modul-Reihenschaltung. Die Module werden auch als Submodule bezeichnet. Im Ausführungsbeispiel der Figur 6 weist jeder Phasenmodulzweig n Module auf. Die Anzahl der mittels ihrer Stromanschlüsse elektrisch in Reihe geschalteten Module kann sehr verschieden sein, mindestens sind zwei Module in Reihe geschaltet, es können aber auch beispielsweise 3, 50, 100 oder mehr Module elektrisch in Reihe geschaltet sein. Im Ausführungsbeispiel ist n = 36: der erste Phasenmodulzweig 611 weist also 36 Module 1_1, 1_2, 1_3, ... 1_36 auf. Die anderen Phasenmodulzweige 613, 618, 621, 627 und 629 sind gleichartig aufgebaut.

Die Module 1_1 bis 6_n des Multilevel-Stromrichters 603 sind als Halbbrücken-Module ausgestaltet. Die sechs Phasenmodulzweige stellen im Ausführungsbeispiel eine dreiphasige Brückenschaltung dar. Eine derartige Brückenschaltung wird auch als Doppelsternschaltung bezeichnet. Der erste Gleichspannungsanschluss 616 und der zweite Gleichspannungsanschluss 617 können im Ausführungsbeispiel unbeschaltet bleiben. Es können jedoch der erste Gleichspannungsanschluss 616 und der zweite Gleichspannungsanschluss 617 auch mit einem Energiespeicher 640 elektrisch verbunden werden, der den Multilevelstromrichter bei Bedarf mit elektrischer Energie versorgen kann. Dieser optionale Energiespeicher 640 ist in der Figur 6 gestrichelt dargestellt. Zwischen dem ersten Gleichspannungsanschluss 616 und dem zweiten Gleichspannungsanschluss 617 liegt eine von dem Energiespeicher 640 bereitgestellte Gleichspannung Ud an. Der Energiespeicher 640 ermöglicht mittels des modularen Multilevelstromrichters eine Einspeisung von Wirkleistung in das Energieübertragungsnetz (und nicht nur eine Einspeisung von Blindleistung).

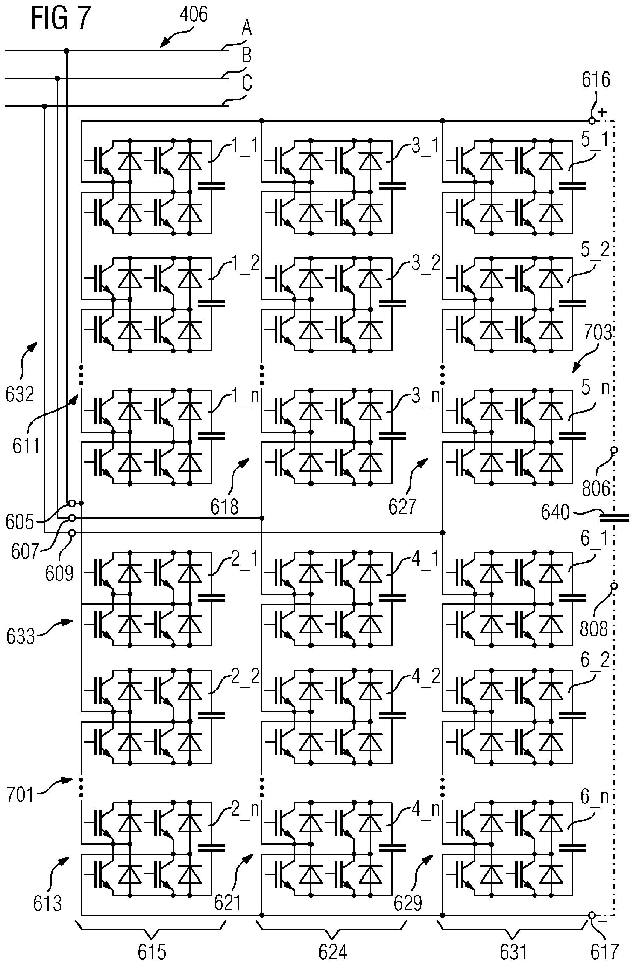

In Figur 7 ist beispielhaft ein Teil einer weiteren Serienkompensationseinrichtung 701 dargestellt. Diese Serienkompensationseinrichtung 701 unterscheidet sich von der in Figur 6 dargestellten Serienkompensationseinrichtung 601 lediglich dadurch, dass der Multilevel-Stromrichter 703 Vollbrücken-Module aufweist (anstelle von Halbbrücken-Modulen wie in Figur 6). Ansonsten ist die Serienkompensationseinrichtung 701 gleichartig aufgebaut.

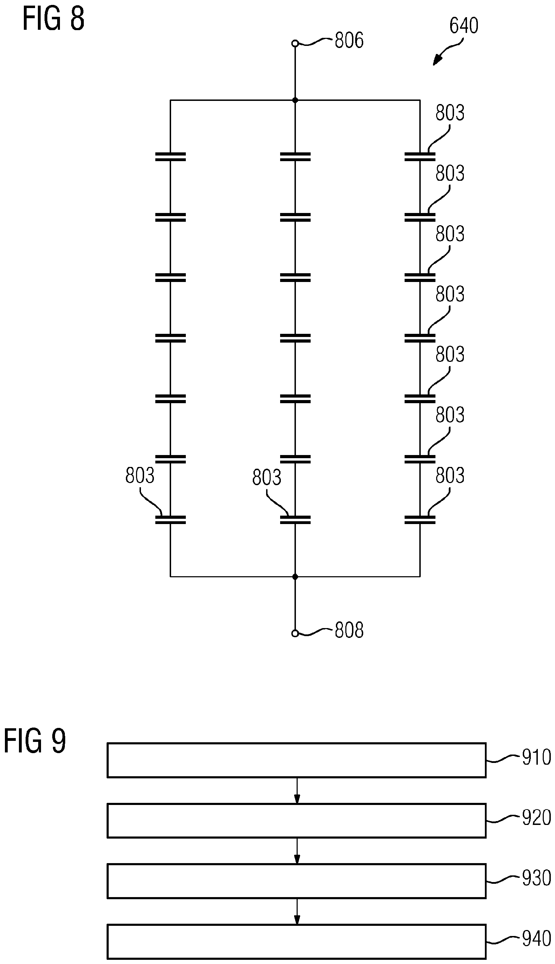

In Figur 8 ist ein Ausführungsbeispiel des optionalen Energiespeichers 640 näher dargestellt. Der Energiespeicher 640 weist eine Mehrzahl von miteinander verbundenen Energiespeichereinheiten 803 auf. Im Ausführungsbeispiel sind diese Energiespeichereinheiten 803 elektrisch in Reihe geschaltet unter Bildung von Energiespeichereinheiten-Reihenschaltungen. Drei solcher Energiespeichereinheiten-Reihenschaltungen sind parallelgeschaltet und bilden den Energiespeicher 640. Die Energiespeichereinheiten-Reihenschaltungen sind jeweils mit einem positiven Energiespeicheranschluss 806 und mit einem negativen Energiespeicheranschluss 808 elektrisch verbunden.

Die schematische Darstellung der Figur 8 ist lediglich beispielhaft zu verstehen. Natürlich können in anderen Energiespeichern andere Anzahlen an Energiespeichereinheiten 803 in Reihe bzw. parallelgeschaltet sein. Durch die Reihenschaltung der Energiespeichereinheiten zu Energiespeichereinheiten-Reihenschaltungen ist es möglich, mittels des Energiespeichers 640 hohe Spannungen bereitzustellen. Durch die Parallelschaltung der drei Energiespeichereinheiten-Reihenschaltungen ist es möglich, mittels des Energiespeichers 640 große Stromstärken bereitzustellen. Die Energiespeichereinheiten 803 können grundsätzlich beliebige elektrische Energiespeichereinheiten sein, insbesondere Kondensatoren oder Batterien. Als Kondensatoren können insbesondere sogenannte Super-Kondensatoren (Supercaps) eingesetzt werden.

In Figur 9 ist beispielhaft der Ablauf eines Serienkompensationsverfahrens für ein elektrisches Energieübertragungsnetz 3 dargestellt. Dabei laufen folgende Verfahrensschritte ab: Verfahrensschritt 910: Von dem modularen Multilevelstromrichter 13 wird eine sich periodisch zeitlich verändernde Spannung erzeugt.

Verfahrensschritt 920: Die Sekundärwicklung 10 des Transformators 7 wird mit der sich periodisch zeitlich verändernden Spannung beaufschlagt.

Verfahrensschritt 930: Von dem Transformator 7 wird diese Spannung auf eine Primärwicklung 4 transformiert. Verfahrensschritt 940: Mittels der Primärwicklung 4 wird die transformierte Spannung seriell in die Phasenleitung L1 des Energieübertragungsnetzes 3 eingespeist/eingeprägt.

Mit der beschriebenen Serienkompensationseinrichtung können vorteilhafterweise lange Phasenleitungen von Energieübertragungsnetzen kompensiert werden. Mit der den Multilevel-Stromrichter aufweisenden Serienkompensationseinrichtung kann (im Unterschied zu einem Thyristor Controlled Series Capacitor TCSC) im nahezu vollständigen induktiven Impedanzbereich gearbeitet werden. Dadurch wird insbesondere eine Lastflusssteuerung in dem Energieübertragungsnetz in einem weiten Leistungsbereich ermöglicht. Zusätzlich ist es mit der Serienkompensationseinrichtung möglich, eine Dämpfung von unerwünschten Schwingungen im Energieübertragungsnetz (Sub-Syncronous Resonances SSR) vorzunehmen. Weiterhin ist es vorteilhafterweise möglich, ein sogenanntes Power Oszillation Dumping (POD) im Energieübertragungsnetz mittels der Serienkompensationseinrichtung vorzunehmen. Im Unterschied zur Anschaltung von einzelnen passiven Kondensatorbauelementen an das Energieübertragungsnetz wird bei der beschriebenen Serienkompensationseinrichtung vermieden, Resonanzstellen im Netz anzuregen und somit unerwünschte SSR hervorzurufen. Zusätzlich kann die Serienkompensationseinrichtung sogar SSR dämpfen, die von anderen mit dem Netz verbundenen Reihenkondensatoren hervorgerufen worden sind. Eine derartige Dämpfung von SSR ist oftmals erwünscht und damit eine besonders vorteilhafte Eigenschaft der Serienkompensationseinrichtung.

Mit dem modulare Multilevelstromrichter können vorteilhafterweise nahezu beliebige Spannungsverläufe erzeugt und über den Transformator in das Energieübertragungsnetz 3 eingeprägt werden. Theoretisch wäre es auch möglich, anstelle des Multilevelstromrichters Dreilevel-Stromrichter zu verwenden und mehrere dieser Dreilevel-Stromrichter in Reihe zu schalten. Damit würde sich zwar auch eine höhere Stufenanzahl (Levelanzahl) ergeben, jedoch stößt dieses Konzept bei einer hohen Anzahl von Leveln (Stufen) an seine Grenzen. Außerdem wäre bei einer derartigen Reihenschaltung von Dreilevel-Stromrichtern der Aufbau nicht linear, da die Reihenschaltanzahl der Dioden der Dreilevel-Stromrichter von der Levelanzahl der Gesamt-Reihenschaltung abhängt. Das heißt, dieses Design würde keine universell einsetzbaren Module aufweisen, sondern es müssten abhängig von den Anforderungen jeweils speziell entwickelte Dreilevel-Stromrichter in Serie geschaltet werden. Außerdem würde bei diesem Konzept eine Erhöhung der Levelzahl zu einer Erhöhung der Anzahl der Kondensatoren im Gleichspannungs-Zwischenkreis der Dreilevel-Stromrichter führen. Dabei wären auch die Ansteuerung und die Energiebilanzierung außerordentlich kompliziert. Diese Probleme werden durch den Einsatz eines modularen Multilevelstromrichters in der Serienkompensationseinrichtung vermieden.

Es wurde eine Serienkompensationseinrichtung und ein Serienkompensationsverfahren beschrieben, welche flexibel an unterschiedlich Erfordernisse angepasst werden können und mit denen flexibel und kostengünstig Energieübertragungsnetze serienkompensiert werden können.

## Patentansprüche

1. Serienkompensationseinrichtung (1) für ein elektrisches Energieübertragungsnetz (3)
- mit einem Transformator (7), wobei eine Primärwicklung (4) des Transformators (7) seriell in eine Phasenleitung (L1) des Energieübertragungsnetzes (3) schaltbar ist, und
- mit einem modularen Multilevelstromrichter (13), der eine Vielzahl von Modulen (1_1 ... 1_n) aufweist, die eine elektrische Modul-Reihenschaltung (22) bilden,
- wobei der modulare Multilevelstromrichter (13) mit einer Sekundärwicklung (10) des Transformators (7) verbunden ist, **dadurch gekennzeichnet, dass**
- der modulare Multilevelstromrichter (603) einen Gleichspannungsanschluss aufweist, und der Gleichspannungsanschluss mit einem Energiespeicher (640) verbunden ist, wodurch der modulare Multilevelstromrichter eingerichtet ist, nicht nur Blindleistung, sondern auch Wirkleistung in das Energieübertragungsnetz einzuspeisen, und
- der Energiespeicher (640) eine Mehrzahl von miteinander verbundenen Energiespeichereinheiten (803) aufweist, die unmittelbar elektrisch in Reihe geschaltet sind unter Bildung von Energiespeichereinheiten-Reihenschaltungen, wobei mehrere solcher Energiespeichereinheiten-Reihenschaltungen parallelgeschaltet sind.

2. Serienkompensationseinrichtung nach Anspruch 1,
**dadurch gekennzeichnet, dass**
- der Transformator (7) zusätzlich eine zweite Primärwicklung (506), eine dritte Primärwicklung (512), eine zweite Sekundärwicklung (509) und eine dritte Sekundärwicklung (515) aufweist, wobei die zweite Primärwicklung (506) seriell in eine zweite Phasenleitung (L2) des Energieübertragungsnetzes (3) schaltbar ist und die dritte Primärwicklung (512) seriell in eine dritte Phasenleitung (L3) des Energieübertragungsnetzes (3) schaltbar ist, die Sekundärwicklung (10), die zweite Sekundärwicklung (509) und die dritte Sekundärwicklung (515) in einer Dreieckschaltung geschaltet sind,
- der modulare Multilevelstromrichter (13) drei Modul-Reihenschaltungen (22, 520, 523) aufweist, die eine Dreieckschaltung bilden, und
- die Dreieckschaltung der Sekundärwicklungen mit der Dreieckschaltung der Modul-Reihenschaltungen verbunden ist.

3. Serienkompensationseinrichtung nach Anspruch 1,
**dadurch gekennzeichnet, dass**
- der modulare Multilevelstromrichter (603) sechs Modul-Reihenschaltungen (611, 613, 618, 621, 627, 629) aufweist, die eine Brückenschaltung bilden.

4. Serienkompensationseinrichtung nach einem der vorhergehenden Ansprüche,
**dadurch gekennzeichnet, dass**
- die Module jeweils mindestens zwei elektronische Schaltelemente (202, 206) und einen elektrischen Modul-Energiespeicher (210) aufweisen.

5. Serienkompensationseinrichtung nach Anspruch 4,
**dadurch gekennzeichnet, dass**
- die zwei elektronischen Schaltelemente (202, 206) der Module in einer Halbbrückenschaltung angeordnet sind, oder
- die Module jeweils die zwei elektronischen Schaltelemente (202, 206) und zwei weitere elektronische Schaltelemente (302, 306) aufweisen, wobei die zwei elektronischen Schaltelemente (202, 206) und die zwei weiteren elektronischen Schaltelemente (302, 306) in einer Vollbrückenschaltung angeordnet sind.

6. Serienkompensationseinrichtung nach einem der vorhergehenden Ansprüche,
**dadurch gekennzeichnet, dass**
- die Energiespeichereinheiten (803) Kondensatoren und/oder Batterien sind.

7. Serienkompensationseinrichtung nach einem der vorhergehenden Ansprüche,
**gekennzeichnet durch**
- eine Steuereinrichtung (28), die dazu eingerichtet ist, den Multilevelstromrichter (13) so anzusteuern, dass der Multilevelstromrichter (13) eine sich periodisch zeitlich verändernde Spannung erzeugt.

8. Serienkompensationsverfahren für ein elektrisches Energieübertragungsnetz (3) mit einer Serienkompensationseinrichtung (1) nach einem der Ansprüche 1 bis 7, bei dem
- von einem modularen Multilevelstromrichter (13) eine sich periodisch zeitlich verändernde Spannung erzeugt wird,
- eine Sekundärwicklung (10) eines Transformators (7) mit dieser Spannung beaufschlagt wird,
- von dem Transformator diese Spannung auf eine Primärwicklung (4) transformiert wird, und
- mittels der Primärwicklung (4) die transformierte Spannung seriell in eine Phasenleitung (L1) des Energieübertragungsnetzes (3) eingeprägt wird.

## Claims

1. Series compensation device (1) for an electrical energy transmission network (3)
- having a transformer (7), wherein a primary winding (4) of the transformer (7) can be connected in series in a phase line (L1) of the energy transmission network (3), and
- having a modular multi-level power converter (13), which comprises a plurality of modules (1_1 ... 1_n) which form an electrical module series circuit (22),
- wherein the modular multi-level power converter (13) is connected to a secondary winding (10) of the transformer (7), **characterized in that**
- the modular multi-level power converter (603) comprises a DC voltage connection and the DC voltage connection is connected to an energy store (640), as a result of which the modular multi-level power converter is configured to feed not just reactive power but also active power into the energy transmission network, and
- the energy store (640) comprises a plurality of energy storage units (803), which are connected to one another and directly electrically connected in series so as to form energy storage unit series circuits, wherein a plurality of such energy storage unit series circuits are connected in parallel.

2. Series compensation device according to Claim 1, **characterized in that**
- the transformer (7) also comprises a second primary winding (506), a third primary winding (512), a second secondary winding (509) and a third secondary winding (515), wherein the second primary winding (506) can be connected in series in a second phase line (L2) of the energy transmission network (3) and the third primary winding (512) can be connected in series in a third phase line (L3) of the energy transmission network (3), the secondary winding (10), the second secondary winding (509) and the third secondary winding (515) are connected in a delta circuit,
- the modular multi-level power converter (13) comprises three module series circuits (22, 520, 523), which form a delta circuit, and
- the delta circuit of the secondary windings is connected to the delta circuit of the module series circuits.

3. Series compensation device according to Claim 1, **characterized in that**
- the modular multi-level power converter (603) comprises six module series circuits (611, 613, 618, 621, 627, 629), which form a bridge circuit.

4. Series compensation device according to one of the preceding claims,
**characterized in that**
- the modules respectively comprise at least two electronic switching elements (202, 206) and one electrical module energy store (210).

5. Series compensation device according to Claim 4, **characterized in that**
- the two electronic switching elements (202, 206) of the modules are arranged in a half-bridge circuit, or
- the modules respectively comprise the two electronic switching elements (202, 206) and two further electronic switching elements (302, 306), wherein the two electronic switching elements (202, 206) and the two further electronic switching elements (302, 306) are arranged in a full-bridge circuit.

6. Series compensation device according to one of the preceding claims,
**characterized in that**
- the energy storage units (803) are capacitors and/or batteries.

7. Series compensation device according to one of the preceding claims,
**characterized by**
- a control device (28) which is configured to actuate the multi-level power converter (13) such that the multi-level power converter (13) generates a periodically temporally variable voltage.

8. Series compensation method for an electrical energy transmission network (3) comprising a series compensation device (1) according to one of Claims 1 to 7, wherein
- a periodically temporally variable voltage is generated by a modular multi-level power converter (13),
- said voltage is applied to a secondary winding (10) of a transformer (7),
- the transformer transforms said voltage on a primary winding (4), and
- by means of the primary winding (4), the transformed voltage is serially injected into a phase line (L1) of the energy transmission network (3).

## Revendications

1. Dispositif (1) compensateur série d'un réseau (3) de transport d'énergie électrique
- comprenant un transformateur (7), un enroulement (4) primaire du transformateur (7) pouvant être monté en série dans une ligne (L1) de phase du réseau (3) du transport d'énergie, et
- comprenant un convertisseur (13) modulaire à plusieurs niveaux, qui a une pluralité de modules (1_1, ..., 1_n), qui forment un circuit (22) série-module électrique,
- dans lequel le convertisseur (13) modulaire à plusieurs niveaux est connecté à un enroulement (10) secondaire du transformateur (7),
**caractérisé en ce que**
- le convertisseur (603) modulaire à plusieurs niveaux a une borne de tension continue et la borne de tension continue est connectée à un accumulateur (640) d'énergie, grâce à quoi le convertisseur modulaire à plusieurs niveaux est conçu pour injecter dans le réseau de transport d'énergie, non seulement de la puissance réactive, mais aussi de la puissance active, et
- l'accumulateur (640) d'énergie a une pluralité d'unités (803) d'accumulateur d'énergie connectées entre elles, qui sont montées directement en série électriquement avec formation de circuits séries d'unités d'accumulateur d'énergie, plusieurs circuits séries d'unités d'accumulateur d'énergie de ce genre étant montés en parallèle.

2. Dispositif compensateur série suivant la revendication 1, **caractérisé en ce que**
- le transformateur (7) a en outre un deuxième enroulement (506) primaire, un troisième enroulement (512) primaire, un deuxième enroulement (509) secondaire et un troisième enroulement (515) secondaire, dans lequel le deuxième enroulement (506) primaire peut être monté en série dans une deuxième ligne (L2) de phase du réseau (3) de transport d'énergie, et le troisième enroulement (512) primaire peut être monté en série dans une troisième ligne (L3) de phase du réseau (3) de transport d'énergie, l'enroulement (10) secondaire, le deuxième enroulement (509) secondaire et le troisième enroulement (515) secondaire sont montés suivant un circuit en triangle,
- le convertisseur (13) modulaire à plusieurs niveaux a trois circuits (22, 520, 523) séries-module, qui forment un circuit en triangle, et
- le circuit en triangle des enroulements secondaires est connecté au circuit en triangle des circuits séries-module.

3. Dispositif compensateur série suivant la revendication 1, **caractérisé en ce que**
- le convertisseur (603) modulaire à plusieurs niveaux a six circuits (611, 613, 618, 621, 627, 629) séries-module, qui forment un circuit en pont.

4. Dispositif compensateur série suivant l'une des revendications précédentes,
**caractérisé en ce que**
- les modules ont chacun au moins deux éléments (202, 206) électroniques de coupure et un accumulateur (210) d'énergie-module électrique.

5. Dispositif compensateur série suivant la revendication 4, **caractérisé en ce que**
- les deux éléments (202, 206) électroniques de coupure des modules sont montés suivant un circuit en demi-pont, ou
- les modules ont chacun les deux éléments (202, 206) électroniques de coupure et deux autres éléments (302, 306) électroniques de coupure, les deux éléments (202, 206) électroniques de coupure et les deux autres éléments (302, 306) électroniques de coupure étant montés suivant un circuit en pont complet.

6. Dispositif compensateur série suivant l'une des revendications précédentes,
**caractérisé en ce que**
- les unités (803) d'accumulateur d'énergie sont des condensateurs et/ou des batteries.

7. Dispositif compensateur série suivant l'une des revendications précédentes,
**caractérisé par**
- un dispositif (28) de commande conçu pour commander le convertisseur (13) à plusieurs niveaux, de manière à ce que le convertisseur (13) à plusieurs niveaux produise une tension variant périodiquement dans le temps.

8. Procédé de compensation série pour un réseau (3) de transport d'énergie électrique, comprenant un dispositif (1) compensateur série suivant l'une des revendications 1 à 7, dans lequel
- on produit une tension variant périodiquement dans le temps par un convertisseur (13) modulaire à plusieurs niveaux,
- on applique cette tension à un enroulement (10) secondaire d'un transformateur (7),
- on transforme par le transformateur cette tension sur un enroulement (4) primaire, et
- au moyen de l'enroulement (4) primaire, on injecte la tension transformée en série dans une ligne (L1) de phase du réseau (3) de transport d'énergie.
